# EUROPÄISCHE PATENTSCHRIFT

(11) **EP 0 596 386 B1**
(45) Veröffentlichungstag und Bekanntmachung des Hinweises auf die Patenterteilung: **13.03.1996**
(21) Anmeldenummer: 93117320.7
(22) Anmeldetag: 26.10.1993
(51) Int. Cl.: F01D 5/28

(54) **Verstellbare Leitschaufel aus faserverstärktem Kunststoff**
Adjustable guide vane formed of fiber reinforced plastic
Aube statorique ajustable fabriqué à partir de plastique renforcé par des fibres

(30) Priorität: 03.11.1992 DE 4237031
(43) Veröffentlichungstag der Anmeldung: 11.05.1994
(73) Patentinhaber: MTU MOTOREN- UND TURBINEN-UNION MÜNCHEN GMBH, D-80976 München (DE)
(72) Erfinder: Sikorski, Siegfried, D-8000 München (DE); Schober, Michael, D-8000 München (DE); Schönacher, Reinhold, D-8000 München (DE)

(56) Entgegenhaltungen:
- EP-A- 0 196 450
- DE-A- 2 644 066
- DE-C- 3 710 321
- PATENT ABSTRACTS OF JAPAN vol. 001, no. 137 (M-046)11. November 1977 & JP-A-52 077 908 (MITSHUBISHI HEAVI IND LTD) 30. Juni 1977
- PATENT ABSTRACTS OF JAPAN vol. 12, no. 197 (M-706)8. Juni 1988 & JP-A-63 005 101 (ISHIKAWAJIMA HARIMA HEAVY IND) 11. Januar 1988

## Beschreibung

Die Erfindung betrifft eine verstellbare Leitschaufel nach dem Oberbegriff des Patentanspruchs 1.

Axialleitgitter mit verstellbaren Leitschaufeln werden beispielsweise bei Hochdruckverdichtern moderner Strahltriebwerke häufig eingesetzt, um den Verdichter optimal innerhalb seiner Betriebsgrenzen betreiben zu können. Bei der heute angewandten Bauweise werden die ersten Statorstufen des Hochdruckverdichters mit verstellbaren Leitschaufeln ausgestattet, welche durch gehäusekonzentrische Stellringe gleichsinnig betätigt werden. Solche Leitschaufeln in der üblichen Metallbauweise setzt sich aus einem Schaufelblatt mit Lagerzapfen beidseits der Blattwurzel mit dazugehörigen Lagerbuchsen und aus einem Hebelarm zur Koppelung des Schaufelblattes mit dem Stellring sowie der dazu notwendigen Verschraubung zusammen. Bei einem vierstufigen Verdichter mit insgesamt etwa 150 Leitschaufeln wird deutlich, welche Vielzahl von Einzelteilen notwendig ist. Darüber hinaus ergibt sich für jede Verbindungsstelle zwischen den Teilen eine Einbautoleranz, welche eine gewisse Ungleichmäßigkeit beim Einstellwinkel der Schaufeln einer Stufe bedingt und somit eine Ungleichförmigkeit in der Anströmung der nachfolgenden Rotorstufe verursacht. In der EP 196 450 A1 wird zwar eine einteilige verstellbare Leitschaufel mit Hebelarm für Axialleitgitter offenbart, jedoch kann die darin beschriebene Blechbauweise bei hochbelasteten Strömungsmaschinen keine ausreichende Betriebssicherheit gewährleisten.

Eine im Abstrakt der JP 63-5101 (A) gelehrte Kunststoffbauweise für Laufschaufeln sieht die Verwendung von in Schaufelblattlängsrichtung ausgerichteten ebenen Kunststoffschichten vor, deren für Laufschaufeln typische Ausrichtung der Schichten für eine vorwiegend auf Biegung und Torsion beanspruchte Leitschaufel weniger geeignet ist.

Hiervon ausgehend ist es Aufgabe der Erfindung eine gattungsgemäße Leitschaufel anzugeben, mit welcher die Anzahl der Bauteile eines Axialleitgitters deutlich verringert, das Bauteilgewicht und der Montageaufwand bei zumindest gleichbleibender Betriebssicherheit reduziert werden kann.

Die gestellte Aufgabe ist durch die im Kennzeichnungsteil des Patentanspruches 1 angegebenen Merkmale gelöst.

Die erfindungsgemäße Leitschaufel hat den Vorteil, aufgrund des integralen Verbundes von Schaufelblatt mit Hebelarm nicht nur die Anzahl der separat zu fertigenden Teile reduzieren zu können, sondern auch den Montageaufwand zu vermindern und die Betriebssicherheit zu erhöhen, da jede separate Verbindung, insbesondere bisher übliche Schraubverbindungen auf eine korrekte und sichere Funktion bei Montage und Inspektion überprüft werden muß. Darüber hinaus können Kosten bei der Ersatzteilbevorratung eingespart werden. Bisher unvermeidbare ungleichmäßige Blatteinstellungen aufgrund von Spiel und Toleranz in der Verbindungsstelle zwischen Schaufelblatt und Hebelarm erübrigen sich. Die Strömungsmaschine kann mit einem höheren Wirkungssgrad betrieben werden. Eine weitere Vereinfachung ergibt sich insbesondere durch die Integration eines Lagerzapfens im blattwurzelseitigen Abschnitt des Hebelarms. Schaufelblatt, Hebelarm und Lagerzapfen bilden somit ein einstückiges Bauteil. In einer weiteren Ausführung ist die Lagerstelle des Hebelarms zur Koppelung mit der Schaufelverstelleinrichtung ebenfalls einstückig mit dem Hebelarm ausgeführt. Diese Lagerstelle kann beispielsweise als Zapfen oder Bohrung ausgebildet sein. Erfindungsgemäß ist die Schaufel aus faserverstärktem Kunststoff (FVK) ausgeführt. Augrund der ausgeprägten anisotropen Werkstoffeigenschaften von Faserverbundwerkstoffen können die auftretenden Betriebslasten vom Schaufelblatt in die Schaufellagerstellen und in den Hebelarm optimal übertragen werden. Hierdurch wird eine ausreichende Festigkeit und Steifigkeit bei geringem Schaufelgewicht erzielt. Ein besonders geringes Bauteilgewicht läßt sich durch die Verwendung von kohlefaserverstärktem Kunststoff (CFK) erreichen. Hierdurch läßt sich gegenüber der konventionellen Metallbauweise erheblich an Gewicht sparen. Da der Hebelarm in seinem Übergangsbereich zum Schaufelblatt, also im Lagerzapfen auch auf Torsion beansprucht wird, gewährleistet die Schaufelgestaltung eine günstige Lastübertragung bei geringen Spannungsspitzen.

Um die Schaufel im Auslegungspunkt möglichst lastfrei, d.h. frei von Torsionsbeanspruchungen zu halten, liegt der aerodynamische Druckpunkt der Leitschaufel in diesem Lastfall auf der Verstellachse. Bei Stellungen der Schaufel außerhalb des Betriebspunktes verursachen die Luftlasten ein erhebliches Torsionsmoment um die Schaufellängsachse, welches über den Hebelarm an die Verstelleinrichtung, d.h. an den Verstellring abgestützt wird. Dieses Drehmoment bewirkt im Hebelarm, welcher sich etwa senkrecht zur Verstellachse erstreckt, ein Biegemoment. Durch die bevorzugte Ausgestaltung der Schaufel nach den Merkmalen des Anspruches 2 kann dieses optimal aufgenommen werden. Die Fasern werden dann idealerweise auf Zug bzw. Druck beansprucht.

Weitere vorteilhafte Ausgestaltungen im Hinblick auf die Faserorientierung innerhalb der Schaufel ergeben sich aus den Merkmalen der Ansprüche 3 bis 6.

Leitschaufeln sind an ihrem radial äußeren Ende über ihre Lagerzapfen in Bohrungen des metallischen Maschinengehäuses gelagert. Radial innen, also rotorseitig, entsprechend in Lagerstellen des Statorgehäuses. Vorzugsweise sitzen die Lagerzapfen fest innerhalb von metallischen Lagerbuchsen, welche ihrerseits drehbar gelagert im gehäuseseitigen Lager sitzen. Hierdurch wird die notwendige Dichtigkeit am Gehäusedurchbruch gewährleistet, da die Passung Buchse/Gehäuselager bei geringer Reibung eng ausgeführt werden kann. Hierzu empfiehlt sich die Weiterbildung der Erfindung gemäß Anspruch 7.

Alternativ hierzu sind die Lagerbuchsen ebenfalls in Faserverbund-Bauweise ausgeführt, so daß die gesamte Schaufel aus einem Werkstoff gefertigt werden kann. Probleme aufgrund unterschiedlicher Temperaturdehnungskoeffizienten innerhalb der Schaufel erübrigen sich hiermit.

Im Nachfolgenden wird eine bevorzugte Ausführungsform der Erfindung unter Bezugnahme auf die beigefügte Zeichnung erläutert. Es zeigt:
- Fig. 1: eine perspektivische Darstellung einer Leitschaufel mit Lagerbuchsen,
- Fig. 2a: einen Längsschnitt durch die Leitschaufel mit metallsichen Lagerbuchsen,
- Fig. 2b: einen Längsschnitt mit integrierter Lagerbuchse in Faserverbund-Bauweise,
- Fig. 3: einen Längsschnitt einer Gasturbine mit verstellbarem Axialleitgitter im Verdichter und
- Fig. 4: eine schematische Explosionszeichnung eines Ausschnittes des Axialleitgitters mit Leitschaufeln in der im Stand der Technik üblichen Bauweise.

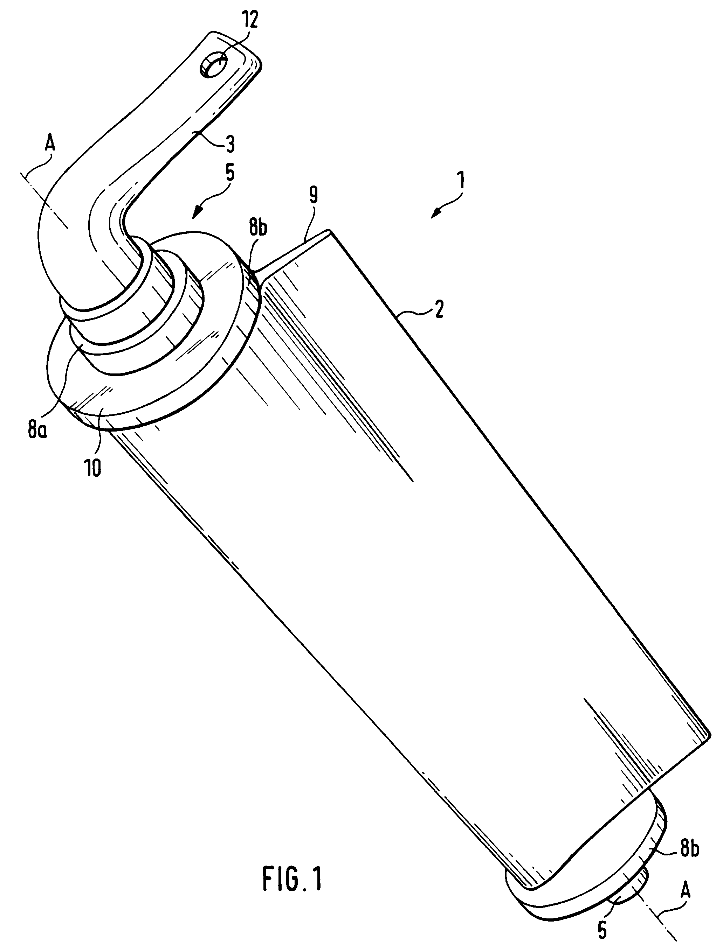

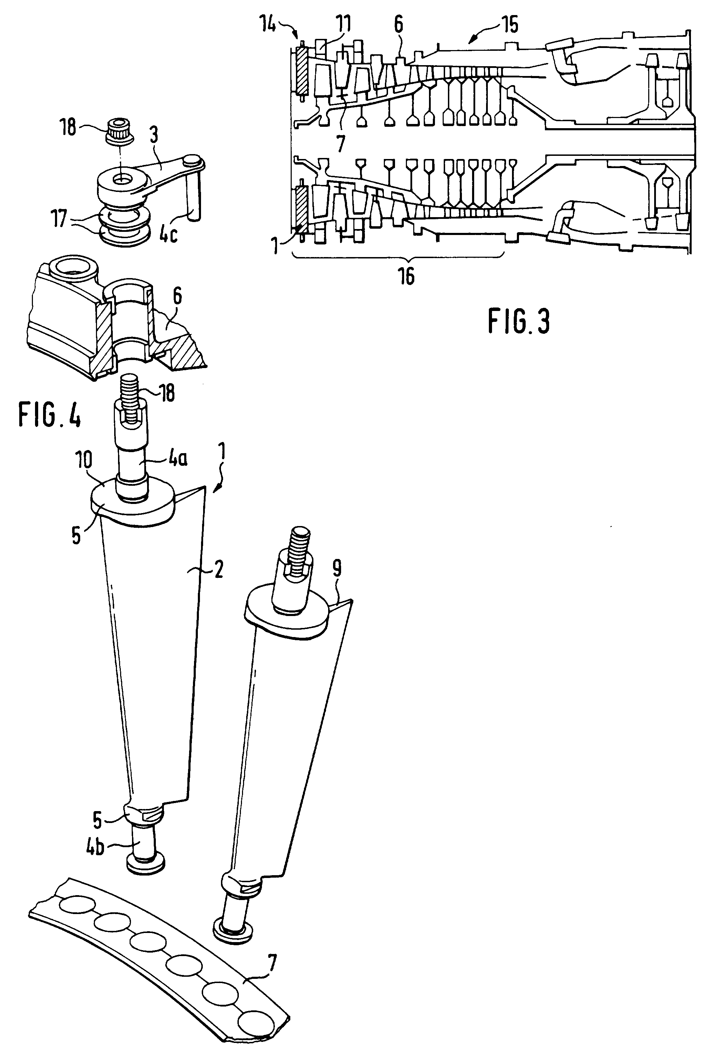

Die in Fig. 1 abgebildete Leitschaufel 1 eines verstellbaren Axialleitgitters für Strömungsmaschinen ist in Verbundbauweise aus kohlefaserverstärktem Kunststoff (CFK) hergestellt. Das Schaufelblatt 2, ein Hebelarm 3 und zwei Lagerzapfen 4a und 4b sind zusammen als Leitschaufel 1 einstückig ausgeführt. Die beiden Lagerzapfen 4a und 4b erstrecken sich koaxial zu der in Schaufellängsrichtung verlaufenden Verstellachse A innerhalb von Lagerbuchsen 5, welche die Lagerzapfen 4a bzw. 4b jeweils konzentrisch umfassen. Die Lagerbuchsen 5 werden beim Herstellen der Leitschaufel 1 mit eingeformt und bilden somit einen reib- und formschlüssigen Verbund mit dem jeweiligen Lagerzapfen 4a und 4b. Die Lagerbuchsen 5 dienen als schaufelseitige Lagerstelle zur Aufnahme in einem Verdichtergehäuse 6 und rotorseitig in einem Lagerring 7, wie das im Stand der Technik (s. Figur 4) üblich ist. Hierzu weisen die Lagerbuchsen 5 einen gestuften zylindrischen Absatz 8a auf, welcher blattseitig in einen flanschartigen Absatz 8b übergeht. Der flanschartige Absatz 8b sitzt jeweils stirnseitig auf der Blattwurzel 9 des Schaufelblattes 2 auf und bildet von der Blattwurzel 9 abgewandt eine ringförmige, senkrecht zur Verstellachse 8 orientierte Lagerfläche 10 aus.

Der gekröpfte Hebelarm 3 erstreckt sich in Verlängerung des bezüglich der Axialströmungsmaschine radial äußeren Lagerzapfen 4a und ist quer zur Verstellachse A abgewinkelt. Zur Koppelung mit einem Stellring 11 (s. Fig. 3) ist das abgewinkelte Ende des Hebelarms 3 mit einer Bohrung 12 versehen. Die Bohrungsachse verläuft parallel zur Verstellachse A. Der Hebelarm 3 dient einerseits zur Übertragung der Drehbewegung des Stellringes 11 in eine Schwenkbewegung der Leitschaufel 1, um das Schaufelblatt 2 in die gewünschte Drosselstellung zu bewegen und andererseits zur Übertragung des aus den Strömungslasten resultierenden Drehmoments um die Verstellachse A in den Stellring 11.

Die Leitschaufel 1 mit integriertem Hebelarm 3 kann alternativ in Schmiede- oder Faserverbundbauweise ausgeführt sein.

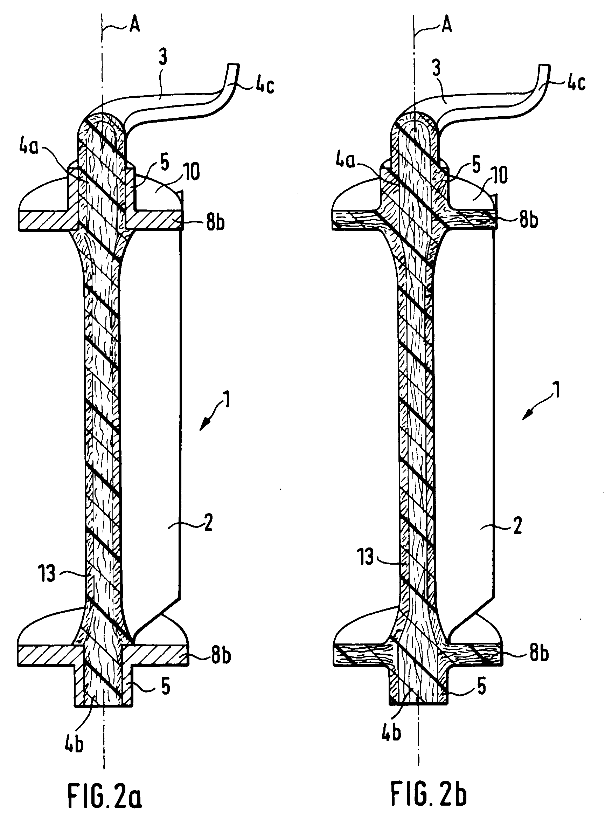

In der Fig. 2a und 2b ist die innere Struktur der Leitschaufel im Längsschnitt sichtbar. Das Schaufelblatt 2 ist ein Verbund aus CFK-Gewebe und CFK-Faserbündeln, wobei das die Blatthülle 13 bildende Gewebe die Faserbündel einschließt. Der aus bidirektionalen Faserschläuchen und zusammengerolltem Gewebe und Faserbündel gebildete Hebelarm 3 geht blattseitig in den Lagerzapfen 4a über. Die Faserschläuche umfassen dabei das Gewebe und die Faserbündel. Die Faserrichtung der außen liegenden Faserschläuche im Bereich des Lagerzapfens 4a beträgt bezüglich der Verstellachse A etwa 45° und kann somit das auftretende Drehmoment optimal aufnehmen, während die Fasern im Inneren der Zapfen 4a und 4b und im Hebelarm 3 eher in Längsrichtung ausgerichtet sind, um Querkräfte und Biegemomente besser aufzunehmen. Die Fasern des Lagerzapfens 4a und 4b und des Heblarmes 3 erstrecken sich bis in das Schaufelblatt 2 hinein und bilden somit mit den Fasern des Schaufelblattes 2 einen festen Verbund. Der in den Fig. 2a und 2b gezeigte Hebelarm 3 ist an seinem Ende statt mit einer Bohrung 12 mit einem Lagerzapfen 4c zur Koppelung mit einem Stellring oder ähnlichem versehen.

Die Herstellung einer solchen Leitschaufel 1 erfolgt, in dem das Gewebe, die Faserbündel, und die Faserschläuche zugeschnitten und in eine in der Skelettfläche des Schaufelblattes 2 geteilten Form mit der gewünschten Faserorientierung eingelegt werden, wobei die Faserschichten der Lagerzapfen 4a und 4b und des Hebelarmes 3 mit den Faserschichten des Schaufelblattes 2 sich schichtweise überlappen. Zur hilfsweisen Fixierung können die Strukturelemente miteinander vernäht werden. Im Falle von metallischen Lagerbuchsen 5 gemäß Fig. 2a werden diese auf die Faserstränge im Bereich der Lagerzapfen 4a und 4b aufgeschoben und ebenfalls in die Form eingelegt. In der optimalen Voll-Faserverbund-Bauweise gem. Fig. 2b sind die Lagerbuchsen ebenfalls aus kurz- und/oder langfaserigen Faserverbund einstückig mit der übrigen Schaufel 1 ausgeführt. In die geschlossene Form mit dem eingeschlossenen Vorformling wird dann unter Hitze und Druck dünnflüssiges Harz eingespritzt und ausgehärtet. Anschließend kann die fertige Leitschaufel 1 mit den integrierten Lagerbuchsen 5 der Form entnommen werden. Gegebenenfalls können jetzt die Lagerbuchsen 5 zur endgültigen Formgebung nachgearbeitet werden. Die verwendeten Faserhalbzeuge können bei Bedarf mit Harz vorimprägniert sein.

Fig. 3 zeigt ein Anwendungsbeispiel einer Leitschaufel 1 in einem verstellbaren Axialleitgitter 14 eines Gaserzeugers 15 für Strahltriebwerke. Die Leitschaufeln 1 sind über die Lagerbuchsen 5 radial außen im Verdichtergehäuse 6 des Gaserzeugers 15 und radial innen mittels eines zweigeteilten Lagerringes 7 gelagert, wie dies aus dem Stand der Technik bekannt ist (s. Fig. 4).

Die zum Drosseln und Entdrosseln des Verdichters 16 verstellbaren Leitschaufeln 1 eines Axialleitgitters 14 sind über ihre Hebel arme mit einem verdichterkonzentrischen Stellring 11 gekoppelt, welcher durch Drehbewegung die Leitschaufeln 1 verstellt.

Eine bei Strahltriebwerken bisher übliche Bauweise von verstellbaren Axialleitgittern 14 bei Hochdruckverdichtern ist in Fig. 4 dargestellt. Die Leitschaufel 1 mit separatem Hebelarm 3 ist in der üblichen differentialen Metallbauweise mit zahlreichen Einzelteilen 17 und Schraubverbindungen 18 ausgeführt.

## Patentansprüche

1. Verstellbare Leitschaufel (1) für Axialleitgitter von Strömungsmaschinen mit einem um eine Verstellachse (A) verschwenkbaren Schaufelblatt (2) und einem von der Verstellachse abgewinkelten Hebelarm (3) zum Schwenken der Schaufel um die Verstellachse (A), wobei das Schaufelblatt (2) mit dem Hebelarm (3) einstückig ausgeführt ist, dadurch gekennzeichnet, daß die aus faserverstärktem Kunststoff ausgeführte Schaufel (1) zumindest am radial äußeren Ende einen zur Verstellachse A koaxialen Lagerzapfen (4a) aufweist, wobei der Hebelarm (3) schaufelblattseitig in den Lagerzapfen (4a) übergeht und die Fasern des Hebelarms (3) sich zumindest teilweise in das Schaufelblatt (2) erstrecken und mit dessen Fasern einen Verbund bildet.

2. Leitschaufel nach Anspruch 1, dadurch gekennzeichnet, daß die Schaufel (1) aus einem Verbund von dreidimensional geflochtenen Faserhalbzeugen mit uni- oder bidirektionalen Faserbündeln gefertigt wird.

3. Leitschaufel nach einem der vorhergehenden Ansprüche, dadurch gekennzeichnet, daß der Hebelarm (3) in Hebellängsrichtung ausgerichtetes, dreidimensional geflochtenes Faserhalbzeug aufweist.

4. Leitschaufel nach einem der vorhergehenden Ansprüche, adurch gekennzeichnet, daß die äußeren Schichten des Hebelarmes (3) von konzentrischen Faserschläuchen gebildet werden, deren Mehrzahl sich vom äußeren Ende des Hebelarmes (3) bis ins Schaufelblatt (2) erstrecken.

5. Leitschaufel nach einem der vorhergehenden Ansprüche, dadurch gekennzeichnet, daß die inneren Schichten des Hebelarmes (3) von Faserbündeln und/oder von Gewebe gebildet werden, deren Fasern vorwiegend in Hebellängsrichtung ausgerichtet sind.

6. Leitschaufel nach einem der vorhergehenden Ansprüche, dadurch gekennzeichnet, daß zumindest die radial äußeren Fasern der Lagerzapfen (4a,b) im Winkel von 30° bis 60° zur Verstellachse A ausgerichtet sind.

7. Leitschaufel nach einem der vorhergehenden Ansprüche, dadurch gekennzeichnet, daß die Lagerzapfen (4a,b) des Schaufelblattes (2) sich innerhalb von metallischen Lagerbuchsen (5) erstrecken.

8. Leitschaufel nach einem der vorhergehenden Ansprüche, dadurch gekennzeichnet, daß die Lagerzapfen (4a,b) des Schaufelblattes (2) sich innerhalb von Lagerbuchsen (5) in Faserverbund-Bauweise erstrecken, wobei die Fasern der Lagerbuchse (5) mit den Fasern der Schaufel (1) einen Verbund bilden.

9. Leitschaufel nach einem der vorhergehenden Ansprüche, dadurch gekennzeichnet, daß die Lagerbuchsen (5) schaufelblattseitig jeweils einen flanschartigen Absatz (8b) aufweisen, der mit der Blattwurzel (9) der Schaufel (1) abschließt.

## Claims

1. Adjustable guide vane (1) for axial guide baffles of jet engines with a vane blade (2) pivotable on an adjusting axis (A) and a lever arm (3) bent away from the adjusting axis for rotating the blade around the adjusting axis (A), the blade (2) and the lever arm (3) being one piece, characterised in that the vane (1) made of fibre-reinforced plastics has at least on the radially outer end a journal (4a) coaxial to the adjusting axis (A), the lever arm (3) merging into the journal (4a) at the vane blade side and the fibres of the lever arm (3) extending at least partially into the blade (2) and forming a bond with these fibres.

2. Guide vane according to claim 1, characterised in that the vane (1) is made from a bond (composite action) of three-dimensional interwoven fibre semi-products with uni- or bidirectional fibre bundles.

3. Guide vane according to one of the previous claims, characterised in that the lever arm (3) has three-dimensional interwoven semi-product aligned in the direction of the length of the lever.

4. Guide vane according to one of the previous claims, characterised in that the outer layers of the lever arm (3) are made from concentric fibre tubes, the majority of which extend from the outer end of the lever arm (3) into the blade (2).

5. Guide vane according to one of the previous claims, characterised in that the inner layers of the lever arm (3) are made from fibre bundles and/or webs, whose fibres are aligned predominantly in the direction of the length of the lever.

6. Guide vane according to one of the previous claims, characterised in that at least the radially outer fibres of the journals (4a, b) are aligned at an angle of 30° to 60° to the adjusting axis A.

7. Guide vane according to one of the previous claims, characterised in that the journals (pivot pins?) (4a, b) of the blade (2) extend inside metallic bushings (5).

8. Guide vane according to one of the previous claims, characterised in that the journals (4a, b) of the blade (2) extend inside metallic bushings (5) in a fibre-composite way, the fibres of the bushings (5) forming a bond with the fibres of the guide vane (1).

9. Guide vane according to one of the previous claims, characterised in that the bushings (5) each have a flange-type stop (8b) at the side of the blade, which is closed off with the blade root (9) of the blade (1).

## Revendications

1. Aube de stator (1) réglable pour grilles de guidage axial de turbomachines, comportant une lame d'aube (2) pivotante autour d'un axe de réglage (A) et un bras de levier (3) coudé par rapport à l'axe de réglage pour faire pivoter l'aube autour de l'axe de réglage (A), la lame (2) étant réalisée d'une seule pièce avec le bras de levier (3), caractérisée en ce que l'aube (1), réalisée en matière plastique renforcée par des fibres, comporte au moins à son extrémité radialement extérieure un tourillon de palier (4a) coaxial à l'axe de réglage (A), le bras de levier (3) devenant de l'aube, un tourillon de palier (4a) du côté de la lame et les fibres du bras de levier (3) s'étendent au moins partiellement dans la lame (2) de l'aube et forment une liaison avec les fibres de la lame.

2. Aube de stator selon la revendication 1, caractérisée en ce que l'aube (1) est formée de l'assemblage de produits semi-finis en fibres, à tissage tridimensionnel, avec des faisceaux de fibres unidirectionnels et bidirectionnels.

3. Aube de stator selon l'une des revendications précédentes, caractérisée en ce que le bras de levier (3) comporte un produit semi-fini de fibres, tissé en trois dimensions, et aligné dans la direction longitudinale du bras de levier.

4. Aube de stator selon l'une des revendications précédentes, caractérisée en ce que les couches extérieures du bras de levier (3) sont formées par des tubes concentriques de fibres dont le plus grand nombre s'étend de l'extrémité extérieure du bras de levier (3) jusque dans la lame (2) de l'aube.

5. Aube de stator selon l'une des revendications précédentes, caractérisée en ce que les couches intérieures du bras de levier (3) sont formées par des faisceaux et/ou des tissus de fibres, dont les fibres sont de préférence alignées dans la direction longitudinale du levier.

6. Aube de stator selon l'une des revendications précédentes, caractérisée en ce qu'au moins les fibres radialement à l'extérieur des tourillons de palier (4a, b) sont alignées suivant un angle de 30° à 60° par rapport à l'axe de réglage (A).

7. Aube de stator selon l'une des revendications précédentes, caractérisée en ce que les tourillons de palier (4a, 4b) de la lame (2) de l'aube passent dans des douilles de palier métalliques.

8. Aube de stator selon l'une des revendications précédentes, caractérisée en ce que les tourillons de palier (4a, 4b) de la lame (2) de l'aube passent dans les douilles de palier (5) en construction composite avec fibres, les fibres des douilles de palier (5) étant liées aux fibres de l'aube (1).

9. Aube de stator selon l'une des revendications précédentes, caractérisée en ce que les douilles de palier (5) comportent, du côté de la lame de l'aube, chaque fois un épaulement (8b) en forme de bride qui termine la base (9) de l'aube (1).
